# EUROPEAN PATENT APPLICATION

(11) **EP 2 039 257 A1**
(43) Date of publication of application: **25.03.2009**
(21) Application number: 08015999.9
(22) Date of filing: 11.09.2008
(51) Int. Cl.: A23N 7/02, A47J 17/18

(54) **Agricultural product peeling apparatus**

(30) Priority: 19.09.2007 JP 2007242719; 23.05.2008 JP 2008135366
(71) Applicant: Circle Tekko Co., Ltd., Takikawa-shi, Hokkaido (JP); Tokuo, Takamichi, Atsubetsku-ku Sapporo-shi Hokkaido (JP); Sasaki, Kenji, Yodogawa-ku Osaka-shi, Osaka-fu (JP)
(72) Inventor: Karasawa, Nobuyuki, Ohota-ku, Tokyo (JP); Kaji, Masayuki, Takikawa-shi, Hokkaido (JP); Watanabe, Katsuhiro, Takikawa-shi, Hokkaido (JP); Kikuchi, Noritoshi, Takikawa-shi, Hokkaido (JP)
(74) Representative: Haft, von Puttkamer, Berngruber

(57) **Abstract**

An agricultural product peeling apparatus includes an alignment supply unit (C), a peeling unit (D), and a plurality of urging plates (15). The alignment supply unit aligns and supplies agricultural product (P) such as potatoes. The peeling unit (D) includes a pair of parallel rotary members (13) with a cutting body on their outer surfaces and peels with the cutting body the agricultural products (P), sequentially supplied from the alignment supply unit (C) to a convey path (14) formed between the rotary members (13). The urging plates (15) move the agricultural products (P) supplied to the start side of the convey path to the end side of the convey path (14).

## Description

### Background of the Invention

The present invention relates to an agricultural product peeling apparatus which peels agricultural products such as potatoes, taros, kiwi fruits, avocados, and the like.

Conventionally, agricultural products such as potatoes are peeled manually by an operator using a knife, peeler, or the like, as disclosed in, e.g., Japanese Patent Laid-Open No. 11-221148, or automatically using an automatic peeling apparatus as disclosed in, e.g., Japanese Patent Laid-Open Nos. 2002-253190, 8-504567, and 2005-040119, and Japanese Utility Model Registration No. 3084921.

According to the automatic peeling apparatus described in Japanese Patent Laid-Open No. 2002-253190, a large number of potatoes are loaded into an outer cylinder having an outer surface with a large number of punching holes through its openable/closeable reception port. The outer cylinder is rotated to peel the potatoes with the hole edges of the punching holes.

According to the peeling apparatus described in Japanese Patent Laid-Open No. 8-504567, a pair of rotary members having outer surfaces with brush-like teeth cut the surface layers of potatoes, thus peeling the potatoes.

In the peeling apparatus described in Japanese Patent No. 3845677, three pairs of drum-shaped rotary blades are disposed in three stages downward from above such that the gaps of the respective pairs are sequentially large, medium, and small. When agricultural product such as potatoes is peeled by the rotary blades of the highest stage and becomes small, it drops naturally through the pair of rotary blades at the highest stage onto the pair of rotary blades at the middle stage. When the agricultural product is further peeled to become smaller than the gap between the rotary blades, it drops natural onto the rotary blades at the lowest stage and is peeled.

In the agricultural product peeling apparatus described in Japanese Utility Model Registration No. 3084921, a pair of cylinders each having an outer surfaces with a large number of punching holes are disposed to oppose parallel to each other. The upper portion of a space between the cylinders forms a convey path for agricultural product such as potatoes. The two cylinders are rotated outward from each other to peel the agricultural product with the hole edges of the punching holes. To facilitate conveyance of the agricultural product, the pair of cylinders are disposed to be inclined with respect to the horizontal plane. One higher end side of the convey path is determined as the agricultural product loading portion, and the other lower end side of the convey path is determined as the discharge portion. The agricultural product loaded into the loading portion sequentially moves along the convey path and is peeled by the hole edges of the punching holes until it is discharged from a discharge portion. More specifically, according to this agricultural product peeling apparatus, the agricultural product loaded into the convey path is moved along the convey path while it is tossed up or rolled by rotation of the cylinders, and is then peeled by the hole edges of the punching holes.

The peeling machine described in Japanese Patent Laid-Open No. 2002-253190 employs a so-called batch scheme. According to this scheme, each time a predetermined number of potatoes are loaded into the outer cylinder and peeled, they must be removed from the outer cylinder. Hence, continuous operation cannot be performed, and the working efficiency is low.

In addition, the number of potatoes that can be loaded at once must be adjusted according to the sizes, shapes, and the like of the potatoes. Hence, the processing efficiency is not constant.

As the peeling apparatus described in Japanese Patent Laid-Open No. 8-504567 uses water, it requires appropriate drainage facilities. In recent years, drainage regulations are becoming very strict. To process the waste water as industrial wastes, the skin and water must be separated. Thus, the processing time prolongs and the cost increases.

In the peeling machine described in Japanese Patent No. 3845677, the drum-shaped rotary blade shafts are disposed in the three stages. Accordingly, a vertical conveyor is necessary to temporarily lift the potatoes to be supplied to the rotary blade shafts. This increases the height of the entire apparatus and complicates the structure.

In the agricultural product peeling apparatus described in Japanese Utility Model Registration No. 3084921, since the two cylinders are disposed to be inclined downward, the loaded potatoes move while rolling on the downwardly inclined cylinders. This movement is not forced and is accordingly unreliable. Therefore, the peeled state (accuracy) is not constant and cannot be adjusted, and the working speed (efficiency) is not constant. More specifically, although it is possible to try to adjust the feed speed by setting the angles of inclination of the cylinders, the peeled state and processing time inevitably change due to changes in sizes and shapes of the potatoes.

### Summary of the Invention

It is an object of the present invention to provide a so-called dry type, simple-structure agricultural product peeling apparatus which does not use water and can stably perform peeling continuously at high accuracy.

In order to achieve the above object, according to the present invention, there is provided an agricultural product peeling apparatus comprising a alignment supply unit which arranges and supplies agricultural product such as potatoes, a peeling unit which includes a pair of parallel rotary members with a cutting body on outer surfaces thereof and peels the agricultural product, sequentially supplied from the alignment supply unit to a convey path formed between the rotary members, with the cutting body, and a plurality of urging plates which move the agricultural product supplied to a start end side of the convey path to a terminal end side of the convey path.

### Brief Description of the Drawings

Fig. 1 is a side view showing an agricultural product peeling apparatus according to an embodiment of the present invention;
Fig. 2 is a plan view of this agricultural product peeling apparatus;
Fig. 3 is a side view of this agricultural product peeling apparatus from which the side plate of a peeling unit has been removed;
Fig. 4 is an enlarged side view of a reception hopper and its periphery of this peeling unit;
Fig. 5 is a sectional view of the main bodies of rotary members;
Fig. 6 is a plan view of a reception detection sensor;

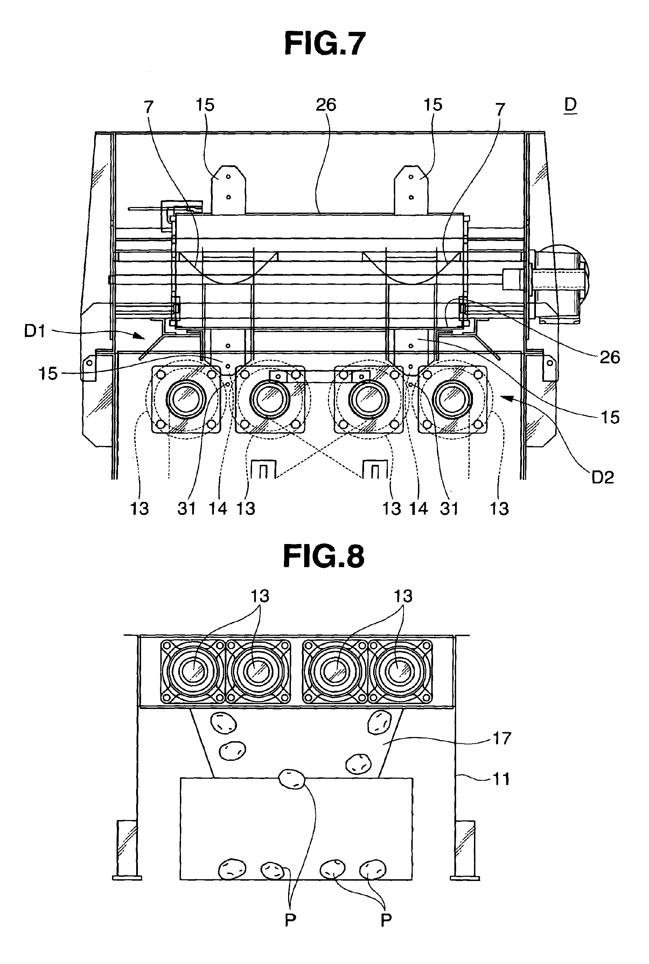

Fig. 7 is a sectional view taken along the line VII - VII of Fig. 1;
Fig. 8 is a rear view of this peeling apparatus;
Fig. 9A is a plan view showing a rotary member according to another embodiment;
Fig. 9B is a plan view showing a rotary member according to still another embodiment;
Fig. 9C is a plan view showing rotary members according to still another embodiment;
Fig. 10 is a plan view showing a rotary member according to still another embodiment;
Fig. 11 is a plan view of the main part of this peeling unit;
Fig. 12 is a sectional view taken along the line XII - XII of Fig. 11;
Fig. 13 is a sectional view taken along the line XIII - XIII of Fig. 12;
Fig. 14 is a plan view showing a support member according to another embodiment;
Fig. 15 is a sectional view taken along the line XV - XV of Fig. 14; and
Fig. 16 is a sectional view taken along the line XVI - XVI of Fig. 15.

### Description of the Preferred Embodiments

The present invention will be described hereinafter in detail by way of embodiments shown in the accompanying drawings.

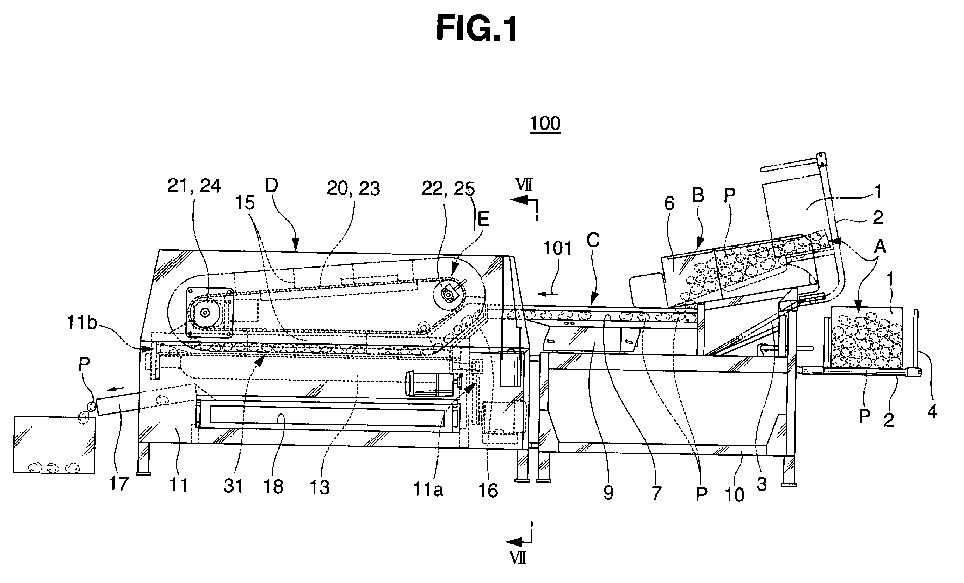

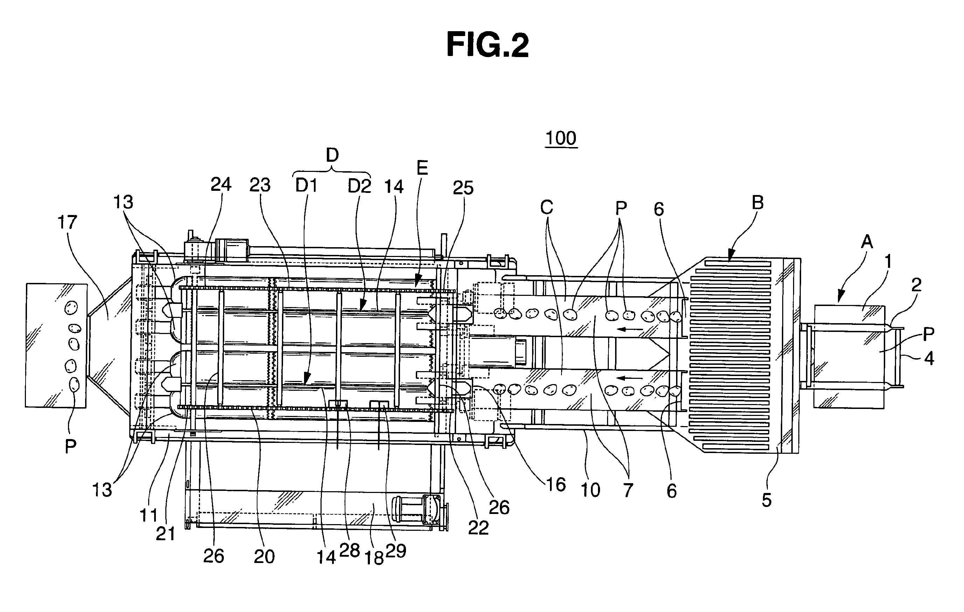

Referring to Figs. 1 and 2, an agricultural product peeling apparatus 100 according to this embodiment comprises a supply device A, a hopper B, two systems of alignment supply units (feeders) C, a peeling unit D, and the like from the supply side to the discharge side in the convey direction (the direction of an arrow 101 in Fig. 1) of the agricultural product P. The supply device A sequentially supplies agricultural product P such as potatoes. The hopper B receives the agricultural product P. The alignment supply units (feeders) C sequentially supply the agricultural product P downward while arranging it. The peeling unit D is provided downstream of the respective alignment supply units C and peels the agricultural product P.

The supply device A comprises a pivotal arm 2 on which a container 1 can be mounted and which can move vertically, and a gas damper 3 which holds the pivotal arm 2. The pivotal arm 2 can pivot between a container-placed posture (the horizontal state indicated by a solid line in Fig. 1) in which the container 1 is mounted, and an agricultural product supply posture (the vertical state indicated by alternate long and two short dashed lines in Fig. 1) in which the mounted container 1 is fallen sideways to supply the agricultural product P to the hopper B. A handle 4 to pivot the pivotal arm 2 is attached to the distal end of the pivotal arm 2.

The hopper B has two discharge ports 6 with wider widths on the side of a reception port 5 (Fig. 2) and corresponding to the respective alignment supply units C, and is disposed to be inclined such that its side on the discharge ports 6 is lower than the reception port 5, in other words, such that it is inclined toward the peeling unit D. Therefore, the agricultural products P supplied from the supply device A to the hopper B are temporarily stored in the hopper B, gradually discharged from the respective discharge ports 6, and supplied to the two systems of alignment supply units C.

The two systems of alignment supply units C convey the agricultural products P supplied from the discharge ports 6 of the hopper B toward the peeling unit D while aligning them in a row. For this purpose, each alignment supply unit C comprises a conveying plate body 7, a spring (not shown), and a vibration mechanism 9. In the conveying plate body 7, a large number of elastic projections are formed on a stainless steel base which has an arcuate section with warped two sides. The spring elastically supports the conveying plate body 7. The vibration mechanism 9 vibrates the conveying plate body 7.

The agricultural products P supplied onto the conveying plate body 7 are aligned in a row by the vibration applied by the vibration mechanism 9 and are conveyed to the peeling unit D. Where necessary, a drive signal from a controller (not shown) controls the vibration of the vibration mechanism 9. This adjusts the number of agricultural products P to be supplied to the peeling unit D. In Figs. 1 and 2, reference numeral 10 denotes a machine frame which supports the supply device A, hopper B, and alignment supply units C.

The peeling unit D comprises two systems of peeling lines D1 and D2 which peel the agricultural products P sequentially supplied from the respective alignment supply units C.

The peeling line D1 comprises a pair of parallel rotary members 13 which horizontally extend downstream of the corresponding alignment supply unit C. The rotary members 13 comprise hollow cylinders, have cutting bodies 12 formed on their outer surfaces, and rotatably, horizontally extend parallel to machine frames 11a and 11b to be spaced apart by a narrow gap through which the agricultural products P will not drop. An upper space (V-shaped valley) between the corresponding rotary members 13 forms a convey path 14 which conveys the agricultural products P.

The cutting bodies 12 comprise punching holes (the cutting bodies will be referred to as punching holes hereinafter) formed of a large number of through holes.

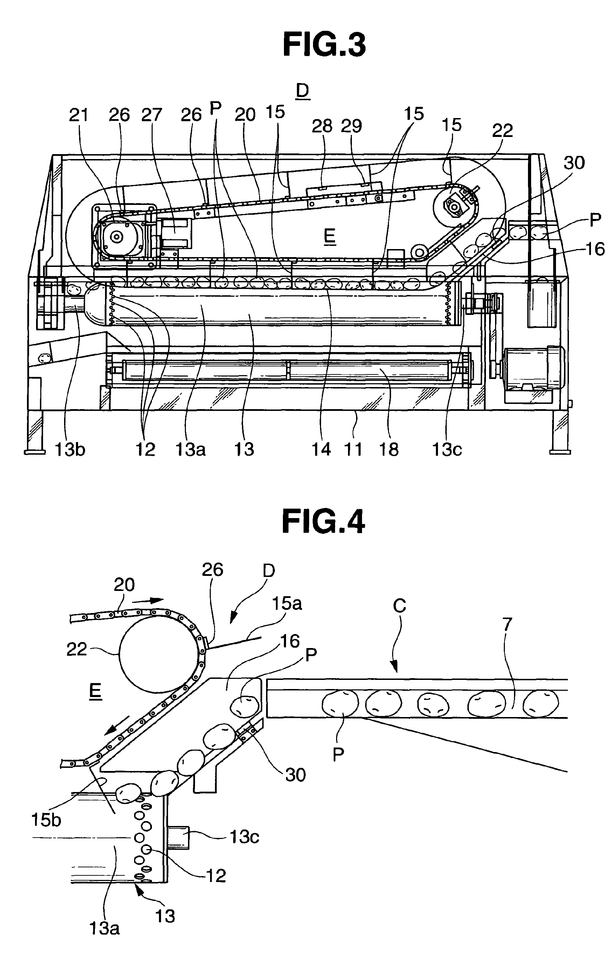

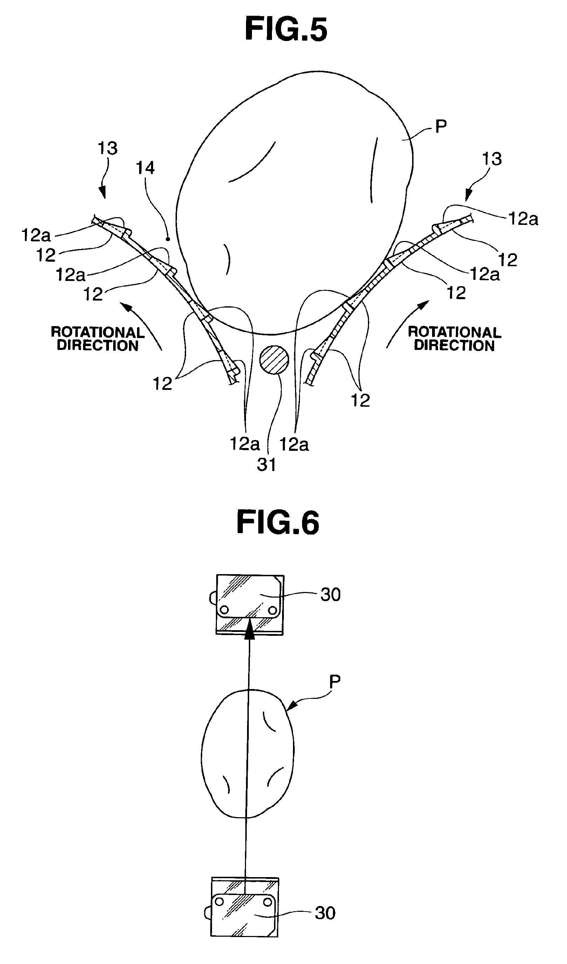

When the agricultural products P are supplied from each alignment supply unit C to the corresponding convey path 14 between the pair of rotary members 13 through a corresponding reception chute 16 (see Figs. 3 and 4), they move from the loading portion toward the discharge portion at a predetermined speed along the corresponding convey path 14. During this movement, the hole edges of the punching holes 12 of the rotary members 13 peel the skins covering the surfaces of the agricultural products P, and the peeled agricultural products P are discharged to a discharge chute 17. If the rotary members 13 comprising cylinders are formed by punching metal plates from the lower surfaces to form the punching holes 12, fins 12a form on the hole edges of the punching holes 12 on the upper surfaces of the rotary members 13, as shown in Fig. 5. Each punching hole 12 is formed by punching while shifting the positions of a punch and die. Then, the fin 12a does not have a uniform height on the entire circumference of the hole edge, but its height has a gradient that gradually decreases in the rotational direction of the corresponding rotary member 13. When the fin 12a has a gradient in this manner, it bites into the surface of the agricultural product P and serves as a cutting body. Hence, the peeling efficiency becomes higher than that of a punching hole with no fin (this resembles a file that cannot cut well when it is moved in a direction opposite to the direction of its saw). As the peeling line D2 has the same structure as that of the peeling line D1, the same components, same portions, and same locations of the peeling line D2 are denoted by the same reference numerals, and a repetitive description will be omitted.

The pair of rotary members 13 rotate such that their upper outer surfaces move outward, as indicated by arrows in Fig. 5, to toss up the agricultural products P in the convey path 14. Simultaneously, urging plates 15 (to be described later) forcibly move the agricultural products P from the start side to the end side, in other words, from the upstream side to the downstream side. A skin discharging conveyor 18, which discharges the waste of the peeled skin to the side of a machine frame 11, is disposed under the rotary members 13.

The rotary members 13 will be described in more detail. Each rotary member 13 comprises a cylindrical main body portion 13a (a portion in Fig. 3 from which the shafts at two ends are removed) formed of a punching plate, and a pair of shafts 13b and 13c provided to the two ends of the main body portion 13a. The main body portion 13a has a diameter of 165 mm and a length of about 1.3 m. Such a rotary member 13 can be fabricated easily at a low cost by bending the punching plate into a cylinder, welding the two end edges of the cylinder in the circumferential direction, and forming the shafts 13b and 13c at the two ends in the axial direction. The diameter and length of the main body portion 13a can be arbitrarily set within ranges of about 100 mm to 200 mm and about 1 m to 2 m, respectively. The punching holes 12 formed in the outer surface of the main body portion 13a cover the entire outer surface of the main body portion 13a, and their diameters can be appropriately set within the range of, e.g., about 6 mm to 20 mm. In this embodiment, all the punching holes 12 have the same hole diameter (see Figs. 3 to 5).

If the hole diameters of the punching holes 12 are small, only the skin can be peeled and the medullary portion (the edible portion) is not cut much, thus providing a high yield. Also, the outer surface of the agricultural products P can be cut smoothly like a ball. With such punching holes 12, however, peeling takes time. On the other hand, if the hole diameters of the punching holes 12 are large, the medullary portion is cut in a large amount to provide a low yield. Also, the outer surface of the agricultural product P is cut coarsely, and the resultant shape is not like a ball. With such punching holes 12, however, the peeling time can be shortened. When peeling taros, kiwi fruits, avocados, and the like, punching holes 12 with smaller hole diameters than those for peeling potatoes will be appropriate.

When the hole diameters of all the punching holes 12 are the same and the moving speed of the agricultural products P is constant, so-called small-size agricultural products P are started to be peeled at the start point of the convey path 14, and are peeled almost completely by the time it moves to the intermediate portion of the convey path 14. In contrast to this, comparatively large-size agricultural products P are only peeled completely when they reach the end point of the convey path 14. In other words, for the small-size agricultural products P, the convey path 14 may be short; for the large-size agricultural products P, a longer convey path 14 is needed. This situation can be coped with by changing the supply position onto the convey path 14 in accordance with the size of the agricultural product P. For example, comparatively large-size agricultural products P may be supplied at the start point of the convey path 14. If the agricultural products P are of a small size, the supply unit may be set beside or above the peeling unit D, so that the agricultural products P can be supplied at the intermediate portion of the convey path 14.

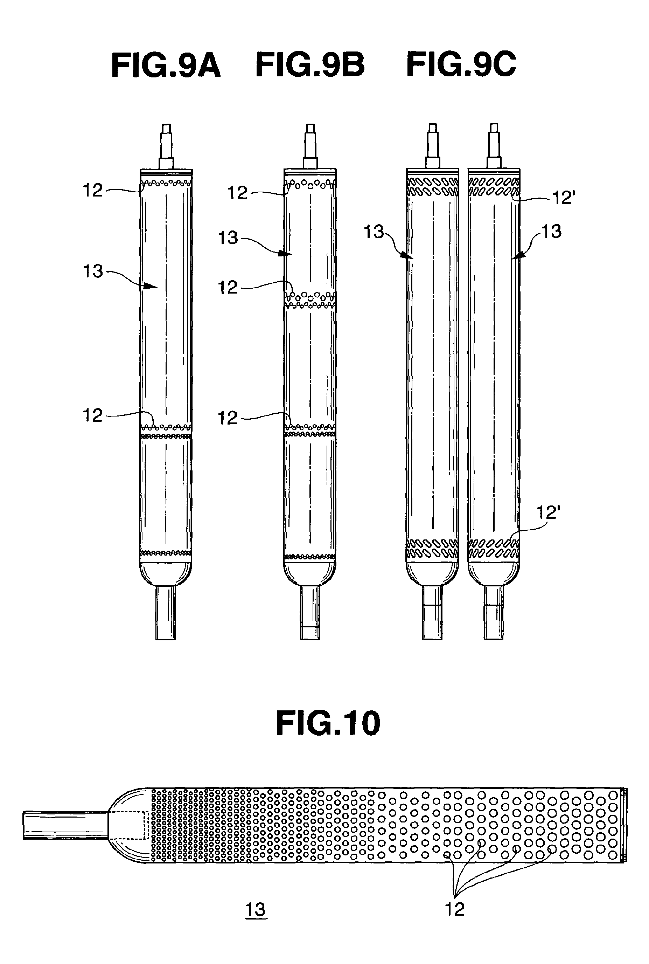

The punching holes 12 of the rotary member 13 are not limited to punching holes of the same hole diameters. A plurality of types of punching holes 12 having different hole diameters can be formed. For example, as shown in Figs. 9A and 9B, to peel the agricultural products P neatly, the hole diameters of the punching holes 12 at the start side (upstream side in the convey path 14) of the rotary member 13 may be large, and the hole diameters of the punching holes 12 at the end side (downstream side in the convey path 14) may be small.

A rotary member 13 shown in Fig. 9A is an example in which punching holes 12 with a hole diameter of 10 mm are formed to cover a region corresponding to about 2/3 of the rotary members 13 on the start side, and punching holes 12 with a hole diameter of 6 mm are formed to cover a region corresponding to the remaining 1/3 of the rotary member 13.

A rotary member 13 shown in Fig. 9B is an example in which punching holes 12 with a hole diameter of 17 mm are formed to cover a region corresponding to 1/3 of the rotary member 13 on the start side, punching holes 12 with a hole diameter of 10 mm are formed to cover a central region corresponding to 1/3 of the rotary member 13 and punching holes 12 with a hole diameter of 6 mm are formed to cover a region corresponding to 1/3 of the rotary member 13 on the end side. With this arrangement, the surface of the agricultural product P can be cut coarsely on the start side and smoothly on the end side.

Fig. 9C shows an example in which, in place of round punching holes 12, elliptic punching holes 12' of the same size are formed obliquely with respect to the axis of each rotary member 13. For example, the punching holes 12' are inclined such that their downstream ends are closer to the inside of a convey path 14 than their upstream ends. However, the present invention is not limited to this, and the punching holes 12' may be inclined outward. This can bias the agricultural products P downstream outside the rotary members 13. More specifically, the cutting resistance of the punching holes 12' with an angle of inclination, together with the urging plates 15, can feed the agricultural products P downstream while peeling them.

Assume that the elliptic punching holes 12' are formed such that their sizes are large at the start side of the rotary member 13 and gradually decrease toward the end side. In the same manner as the rotary members 13 shown in Figs. 9A and 9B, the skin of the agricultural product P is roughly cut by the large punching holes 12' formed on the start side of the rotary member 13, and thereafter the angular portions on the skin of the agricultural product P left by the rough cutting are cut by the small punching holes 12' formed on the end side of the rotary member 13. Then, the outer surface of the agricultural product P can be cut smoothly.

The hole diameters of the punching holes 12 may be changed more finely from the start side toward the end side as in a rotary member 13 shown in Fig. 10. More specifically, Fig. 10 shows an example in which seven types of punching holes 12 with hole diameters of 18 mm, 16 mm, 14 mm, 12 mm, 10 mm, 8 mm, and 6 mm are formed in the rotary member 13.

In this manner, the hole diameters of the punching holes 12 may be continuously changed (e.g., decreased in units of mm), or may be changed for the respective segments. Assume that the hole diameters are gradually decreased. If rough cutting is performed with the large punching holes 12 located on the start side of the rotary member 13 and angular portions left by the rough cutting are subjected to finish cutting with the punching holes 12 with small hole diameters located on the end side, the outer surface of the agricultural product P can be smoothed. The hole diameters of the punching holes 12 of the rotary member 13 are appropriately determined considering the type and size of the agricultural product P, the cutting surface, the yield, the processing time, and the like.

The rotational speed of the rotary member 13 is preferably about 700 rpm to 1,400 rpm. The rotational speed is appropriately set together with the moving velocity of the urging plates 15 on the basis of the relationship between the peeling efficiency and accuracy. Although the pair of rotary members 13 are usually rotated at the same rotational speed, their rotational speeds may differ from each other. In this case, the ratio of rotational speed (velocity) should fall within the range of 1 : 1 to 0.5. In this range, the agricultural products P can be forcibly tossed up and rolled in the convey path 14 depending on the difference in rotational speed (velocity). Even large agricultural products P can be peeled evenly and neatly throughout the entire surface when compared to a case in which the pair of rotary members 13 are rotated at the same speed.

Referring to Figs. 2 to 4, the urging plates 15 are mounted on an endless moving mechanism E. The endless moving mechanism E comprises two sets of sprockets, i.e., a pair of front and rear sprockets 21 and 22 respectively located above the end and start sides of the corresponding rotary member 13 and a pair of front and rear sprockets 24 and 25 respectively located above the end and start sides of the corresponding rotary member 13, two endless chains 20 and 23, a plurality of support rods 26, a motor 27, and the like. The chain 20 extends between the sprockets 21 and 22, and the chain 23 extends between the sprockets 24 and 25. The support rods 26 extend on the chains 20 and 23 at predetermined intervals. The motor 27 causes the chains 20 and 23 to travel in synchronism with each other in the convey direction of the agricultural product P. The urging plates 15 are attached to the respective support rods 26.

When the motor 27 drives the chains 20 and 23 to travel, the urging plates 15 move within the convey path 14 at predetermined intervals together with the chains 20 and 23 to move the agricultural products P loaded in the handle 4 from the loading portion toward the discharge portion.

The drive signal from the controller controls the motor 27 and drives it when conveying the agricultural products P, so that the chains 20 and 23 travel at speeds of about 25 mm/s to 90 mm/s. With respect to the hole diameters of the punching holes 12 of the rotary members 13, preferably, the larger the hole diameters, the faster the chains 20 and 23 travel.

Referring to Figs. 5 and 11 to 13, the agricultural products peeling apparatus 100 further comprises a support member 31 which supports the agricultural products P on the convey path 14 from below.

While the urging plates 15 move the agricultural products P on the convey path 14 from the supply side toward the discharge side, the pair of rotary members 13 peel the agricultural products P. In this process, heavy agricultural products P or large agricultural products P are not tossed up or do not roll but tend to move on the convey path 14 as they are sandwiched between the rotary members 13. In this case, the agricultural products P become flat as the hole edges of the punching holes 12 cut only their lower portions. This degrades the commercial value and yield.

In view of this, the support member 31 is arranged under the convey path 14 formed between the rotary members 13. When each agricultural product P is peeled to a certain degree, the support member 31 supports it from below so as not to be sandwiched by the rotary members 13. Then, the agricultural product P will not be cut any deeper. As the agricultural product P is tossed up and rolls above the support member 31, it will not be cut flat but can be peeled evenly and neatly throughout the entire surface.

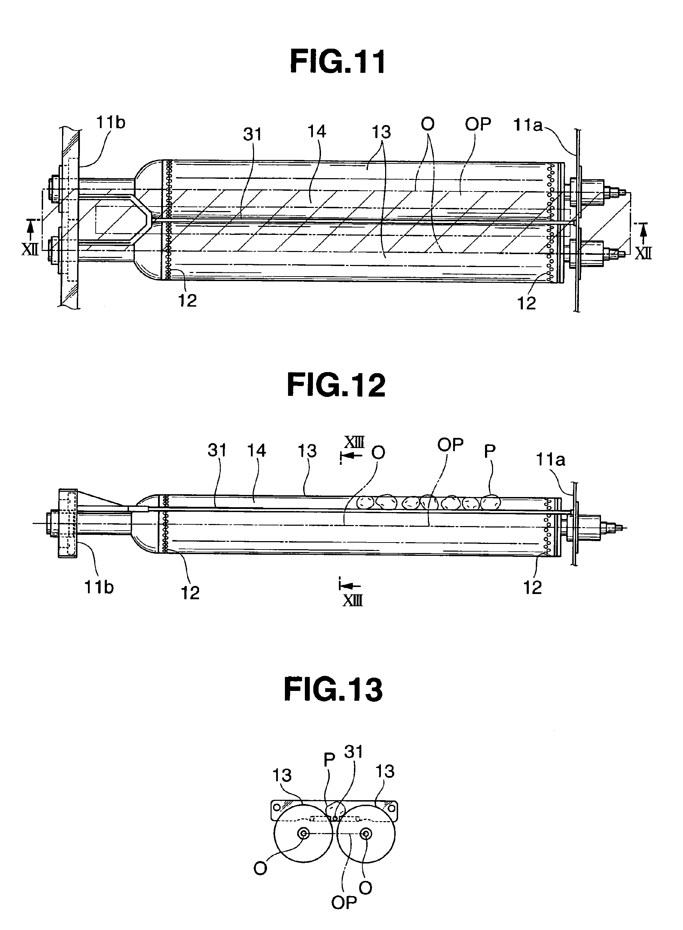

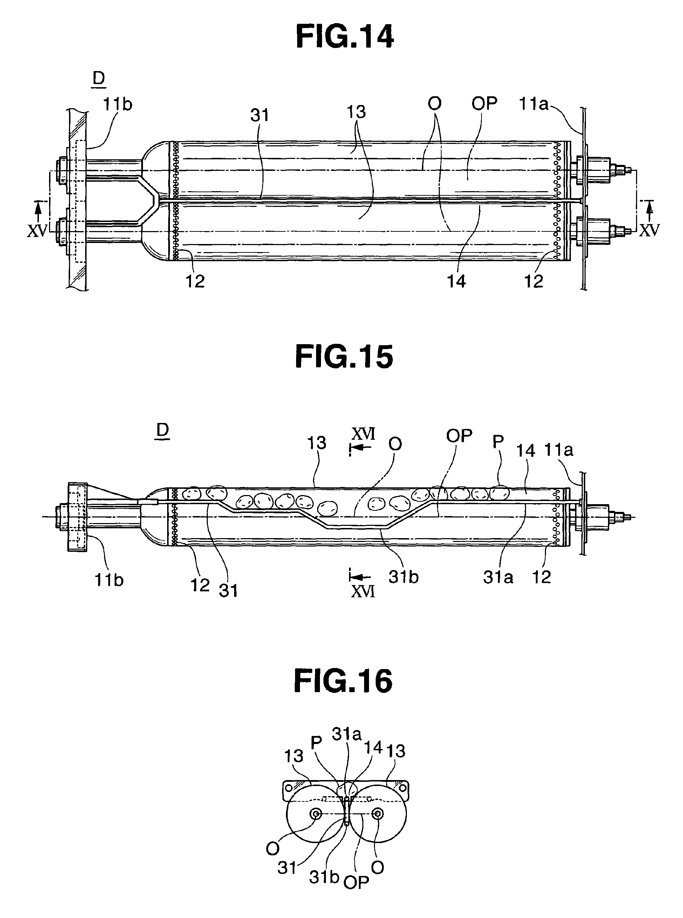

Desirably, the support member 31 may be provided such that its two ends are fixed to the machine frames 11a and 11b and that its upper surface that supports each agricultural product P is located above a plane (horizontal plane) OP (see Fig. 11) including center axes O of the pair of rotary members 13. When peeling, the height of the support member 31, or the proportion of a portion 31a to a portion 31b of the support member 31, may be changed in accordance with the size and weight of the agricultural product P. The portions 31a and 31b are formed by bending the support member 31 partly. The portion 31a is located above the plane OP, and the portion 31b is located below the plane OP, as shown in Figs. 14 to 16 as another embodiment. When the agricultural product P is large, the height of the support member 31 may be increased, or the length of the portion 31a located above the plane OP may be increased. When the agricultural product P is small, the height of the support member 31 may be decreased, or the length of the portion 31a may be decreased. As the support member 31, a wire, or a plate which is wide in the direction of height, or the like can be used to maintain the high rigidity. The width of the support member 31 may be about 8 mm (if the support member 31 is a wire, the diameter may be about 8 mm). The support member 31 with an appropriate width or diameter is desirably used in accordance with the size of the agricultural product P.

In the agricultural product peeling apparatus 100 having the above structure, the alignment supply units C perform the following two control operations simultaneously.

### (1) Supply Control for Peeling Unit D (Avoidance of Dangerous Zone)

The agricultural products P to be supplied to the peeling unit D should be gathered without colliding against the edges of the urging plates 15. The urging plates 15 should not ride on the agricultural products P, and the chains 20 and 23 should not spring up. The urging plates 15 should not pierce the agricultural products P to damage them. Then, the agricultural products P are supplied appropriately. For this purpose, first, the alignment supply units C are controlled in the following manner.

Several (about four to six) agricultural products P are aligned to match the pitch (the intervals of the support rods 26) of the urging plates 15 fixed to the chains 20 and 23. Then, the alignment supply units C are temporarily stopped to make a supply space (Fig. 4). More specifically, as shown in Fig. 4, supply of the following agricultural products P is temporarily stopped to prevent the edge of the urging plate 15a coming from above the corresponding reception chute 16 from riding on the agricultural product P.

Each rotary member 13 peels the plurality of agricultural products P in the corresponding reception chute 16 with the punching holes 12 as the urging plates 15a and 15b push the agricultural products P downward, or regulate the flow of the agricultural products P. When the urging plates 15a coming from above the reception chutes 16 have moved to a position where they will not ride on the agricultural products P, the alignment supply units C are started again.

This control operation takes in the following manner.

The urging plates 15 move at a speed of about 25 mm/s to 90 mm/s, as described above. When each support rod 26 which attaches the corresponding urging plates 15 to the chains 20 and 23 reaches the position of a feeder stopping sensor 28 (see Fig. 3) of the alignment supply units C (that is, when the urging plates 15 reach the position of the feeder stopping sensor 28), the feeder stopping sensor 28 detects this support rod 26. This detection signal stops the alignment supply units C that have been vibrating so far. When the urging plates 15 further advance and reach the position of a feeder starting sensor 29, the sensor 29 detects the corresponding support rod 26. Thus, the alignment supply units C vibrate again to resume supply of the agricultural products P.

When the next urging plates 15 reach the position of the feeder stopping sensor 28, the alignment supply units C stop again. When the urging plates 15 reach the position of the feeder starting sensor 29 and the sensor 28 detects the corresponding support rod 26, the alignment supply units C start to vibrate again. Then, each time the sensors 28 and 29 detect each urging plate 15, the same operation is repeated, and the agricultural products P are supplied and peeled continuously.

The number of agricultural products P which are aligned between the adjacent urging plates 15 and stored in each reception chute 16 changes depending on the duration of the vibration time and stopping time of the alignment supply unit C which are determined by the moving velocity of the urging plates 15 and the distance from the feeder stopping sensor 28 to the feeder starting sensor 29, the strength of the vibration of the alignment supply unit C, and the shapes and sizes (weights) of the agricultural products P.

Therefore, the number of agricultural products P can be adjusted by the positions of the sensors 28 and 29, the velocity of the urging plates 15, and the strength of the vibration of the alignment supply unit C. Although proximity switches are used as the sensors 28 and 29, other switches, e.g., photoelectric switches, limit switches, or the like can be used as the sensors 28 and 29 as far as they can detect the support rod 26.

### (2) Count Control

In addition to supply control for the peeling unit D of the above item (1), secondly, the following control is performed on the basis of the number of agricultural products P to be supplied to each reception chute 16.

More specifically, in supplying the agricultural products P from each alignment supply unit C to the corresponding reception chute 16, sensors 30 (see Figs. 4 and 6) provided to the reception chute 16 count the number of agricultural products P. If a preset number of agricultural products P are stored in the reception chute 16 or on the start ends of the rotary members 13, the alignment supply unit C is stopped even if it need not be stopped by the control operation of the item (1). This prevents excessive supply. Although the opposing photoelectric switches are used as the sensors 30, switches of other types such as limit switches can be used.

When the urging plate 15 guides the stored agricultural products P downstream and the next urging plate 15 moves for a predetermined distance to reach the feeder starting sensor 29, the alignment supply unit C is started again, and counting of the number of agricultural products P is started again.

With only the control operation of the above item (1), the number of supplied products may change depending on the time of vibration of the alignment supply unit C, the magnitude of the vibration, and the shapes and sizes of the agricultural products P. For example, when a large, heavy product P is included, if the vibration is weak, the supply speed may decrease undesirably. If control on the basis of supply count is performed in addition to the control operation of the above item (1), even when the vibration of the alignment supply unit C is increased, excessive supply to the reception chutes 16 can be prevented. Consequently, the same number of agricultural products P can be supplied to the peeling unit D regardless of the variations in size of the agricultural product P.

In this manner, with the agricultural product peeling apparatus 100 according to the present invention, the control operations of both the above items (1) and (2) are performed, so that the agricultural products P can be stably supplied to the peeling unit D under any conditions. More specifically, the intervals of the agricultural products P to be peeled become almost uniform regardless of the sizes or weights of the agricultural products P. The peeling accuracy thus becomes uniform and stable to provide high yield. Accordingly, the number of peeled agricultural products P per unit time becomes stable.

According to the present invention, when the agricultural product P is cut to a certain degree, the support member 31 provided under the convey path 14 supports it from below. This prevents the agricultural product P from being conveyed as it is sandwiched between the pair of rotary members 13. Consequently, the agricultural product P moves while tossing up or rolling on the support member 31. During this movement, the agricultural product P is evenly peeled by the hole edges of the punching holes 12 or 12'. Therefore, the agricultural product P will not be cut flat, so that the peeling yield can be improved.

As the support member 31 supports the agricultural product P with part or the entire portion of its upper surface, it can control the cutting amount during peeling.

In the above embodiment, the endless moving mechanism moves the urging plates 15. However, the present invention is not limited to this. An auger screw may be provided in the convey path 14, and be used as an urging plate to move the agricultural products P.

In the above embodiment, the rotary members 13 are formed cylindrically, and a large number of punching holes 12 or 12' formed in their outer surfaces are used as the cutting bodies to peel the agricultural products P. However, the present invention is not limited to this, and holes may be formed by machining. Alternatively, files or blades with shapes similar to those of the fins 12a shown in Fig. 5 may be formed on the outer surfaces of the rotary members 13, and may be used as cutting bodies.

## Claims

1. An agricultural product peeling apparatus **characterized by** comprising:
an alignment supply unit (C) which aligns and supplies agricultural products (P) such as potatoes;
a peeling unit (D) which includes a pair of parallel rotary members (13) with a cutting body (12) on outer surfaces thereof and peels with said cutting body (12) the agricultural products (P) sequentially supplied from said alignment supply unit (C) to a convey path (14) formed between said rotary members (13); and
a plurality of urging plates (15) which move the agricultural products (P) supplied to a start side of said convey path (14) to an end side of said convey path (14).

2. An apparatus according to claim 1, wherein said urging plates (15) are disposed at needed intervals in a convey direction of the agricultural products (P).

3. An apparatus according to claim 1, further comprising an endless moving mechanism (E) which moves said urging plates (15).

4. An apparatus according to claim 1, wherein said alignment supply unit (C) further comprises a stopping sensor (28) which temporarily stops supply of the agricultural products (P) upon detection of each of said urging plates (15), and a starting sensor (29) which resumes supply of the agricultural products (P) upon detection of said each urging plate (15) after said stopping sensor (28) detects said each urging plate (15).

5. An apparatus according to claim 1, wherein said alignment supply unit (C) temporarily stops supply of the agricultural products (P) after supplying a predetermined number of agricultural products (P) to said peeling unit (D), and resumes supply of the agricultural products (P) when said each urging plate (15) reach a predetermined position.

6. An apparatus according to claim 1, wherein said pair of rotary members (13) comprise cylinders, and said cutting body (12) comprises a plurality of punching holes formed in outer surfaces of said cylinders.

7. An apparatus according to claim 6, wherein said punching holes (12) comprise a plurality of types of punching holes with different hole diameters.

8. An apparatus according to claim 6, wherein said punching holes (2) have hole diameters that gradually decrease from a start side toward an end side of said pair of rotary members (13).

9. An apparatus according to claim 6, wherein said punching holes (12') have elliptic shapes which are inclined with respect to axes of said pair of rotary members (13).

10. An apparatus according to claim 1, wherein said pair of rotary members (13) have different rotational speeds.

11. An apparatus according to claim 1, further comprising a support member (31) which extends in said convey path (14) to support the agricultural product (P).

12. An apparatus according to claim 11, wherein one of part and an entire portion of an upper surface of said support member (31) is located above a plane including center axes (OP) of said pair of rotary members (13).
